# EUROPEAN PATENT APPLICATION

(11) **EP 3 333 759 A1**
(43) Date of publication of application: **13.06.2018**
(21) Application number: 16838447.7
(22) Date of filing: 20.07.2016
(51) Int. Cl.: G06K 9/00

(54) **METHOD AND DEVICE FOR AUTOMATICALLY CAPTURING TARGET OBJECT, AND STORAGE MEDIUM**

(30) Priority: 27.08.2015 CN 201510537481
(71) Applicant: Shenzhen Prtek Co. Ltd., Shenzhen, Guangdong 518026 (CN)
(72) Inventor: LIU, Guohua, Shenzhen Guangdong 518026 (CN)
(74) Representative: Manitz Finsterwald Patentanwälte PartmbB
(86) International application number: PCT/CN2016/090628
(87) International publication number: WO 2017/032187

(57) **Abstract**

A method of automatically capturing a target object includes: acquiring an image containing a gesture of a user and the target object; identifying the gesture of the user and outputting a gesture identification result, wherein the gesture identification result is a gesture showing an object is held by a hand or a gesture showing the hand pointing to the object; determining a position of the target object, identifying the target object according to the gesture identification result, and outputting an image identification result; and interacting with the user according to the image identification result.

## Description

### CROSS REFERENCE TO RELATED APPLICATIONS

The present application claims the benefit of Chinese patent Application No. 201510537481.4, entitled "METHOD AND DEVICE OF AUTOMATICALLY CAPTURING A TARGET OBJECT" filed on August 27, 2015, the entire content of which is incorporated herein in its entirety.

### TECHNICAL FIELD

The present disclosure relates to the technology of computer identification, and particularly relates to a method, device and storage medium of automatically capturing a target object.

### BACKGROUND

Artificial Intelligence is a new technological science that studies and develops theories, methods, techniques, and applications that simulate, extend, and expand human intelligence. Studies of Artificial Intelligence include face identification, voice identification, image identification, text identification, facial expression identification, age identification, voiceprint identification, action identification and so on. Recently, the technology is developed rapidly, so that more and more smart products begin to come out.

However, conventional smart products are also limited to identify images in a simple environment. When it is necessary to identify one of a plurality of target objects or one part of a target object, the machine does not know which one is the target object, and it needs people to operate the machine to specify the position, so that experience of the user is not good enough. For example, when people is interacting with the machine, people ask the smart products "what is this?", "Look here", the smart products do not understand what "this", "here" and the like mean, that is to say, the smart products cannot be prepared to capture the target object referred by "this".

### SUMMARY

According to various embodiments disclosed by the application, a method, a device and a storage medium of automatically capturing a target object are provided.

A method of automatically capturing a target object includes:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and
interacting with the user according to the image identification result.

A device includes a processor; and a memory having instructions stored thereon, the instructions, when executed by the processor, cause the processor to perform the following steps:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and
interacting with the user according to the image identification result.

One or more computer non-transitory storage medium storing computer readable instructions that, when executed by the one or more processors, cause the one or more processors to perform the steps of:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and
interacting with the user according to the image identification result.

In the above method, device and storage medium of automatically capturing a target object, the image containing the gesture of the user and the target object is acquired; the gesture of the user is identified and the gesture identification result is outputted; the position of the target object is determined, the target object is identified according to the gesture identification result, and the image identification result is outputted; the user is interacted with according to the image identification result; so that even if it needs to identify one of a plurality of the target objects or a part of a target object, the target object can be also captured accurately according to the gesture of the user; and then the target object can be identified and the user can be interacted with, which improves identification accuracy and interactive performance.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
Fig. 1 is an internal schematic diagram of a device of automatically capturing a target object in an embodiment;
Fig. 2 is a block diagram of the device of automatically capturing the target object in an embodiment;
Fig. 3 is a schematic diagram of a gesture of a user;
Fig. 4 is another schematic diagram of a gesture of a user;
Fig. 5 is yet another schematic diagram of a gesture of a user;
Fig. 6 is a block diagram of a device of automatically capturing a target object in another embodiment;
Fig. 7 is a flowchart of a method of automatically capturing a target object in an embodiment;
Fig. 8 is a flowchart of a method of automatically capturing a target object in another embodiment.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

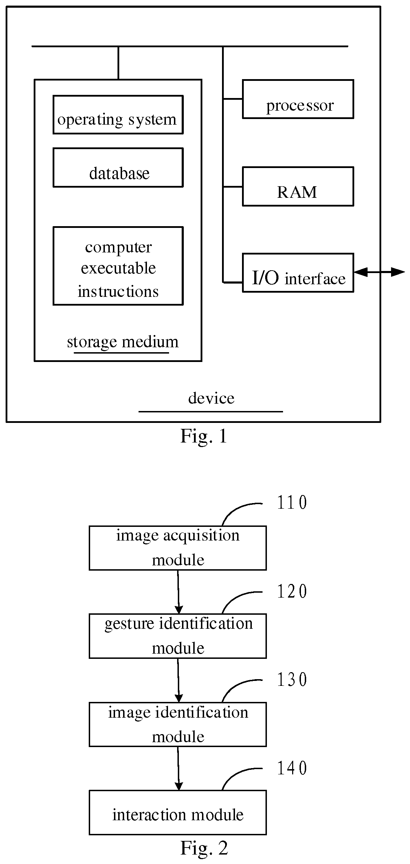

Fig. 1 is an internal schematic diagram of a device of automatically capturing a target object in an embodiment.

In the embodiment, the device of automatically capturing the target object may be any smart product such as a robot, a television or the like, including a processor, a storage medium, a RAM (Random-Access Memory) and an input/output (I/O) interface connected through a system bus. The storage medium of the device stores an operating system, a database and computer executable instructions. The database is configured to store data such as images of the gesture of the user and the target object, the image identification result and the like. When the instructions are executed by CPU, a method of automatically capturing the target object can be implemented. The processor of the device is configured to provide computing and control capabilities to support the operation of the entire device. The RAM of the device provides an running environment for the computer executable instructions in the storage medium. The I/O interface of the device is configured to connect other apparatuses.

Fig. 2 is a block diagram of the device of automatically capturing the target object in an embodiment.

The internal structure of the device may correspond to the structure shown in Fig. 1, and each of the following modules may be implemented in whole or in part by software, hardware, or a combination thereof. As shown in Fig. 2, in an embodiment, the device of automatically capturing the target object includes an image acquisition module 110, a gesture identification module 120, an image identification module 130, and an interaction module 140. The image acquisition module 110 is configured to acquire the image containing the gesture of the user and the target object. The gesture identification module 120 is configured to identify the gesture of the user and output the gesture identification result, the gesture identification result is a gesture showing the object is held by the hand or a gesture showing the hand pointing to the object. The image identification module 130 is configured to determine the position of the target object, identify the target object according to the gesture identification result, and output the image identification result. The interaction module 140 is configured to interact with the user according to the image identification result.

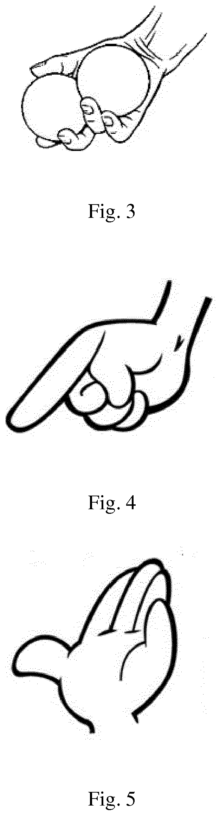

The image acquisition module 110 is a camera configured to acquire image information containing the gesture of the user and the target object. In an embodiment, the gesture of the user may be a close state of fingers as shown in Fig. 3 or a pointing state of a finger as shown in Fig. 4. The target object is a single individual or a part of a single individual. The single individual here can be any object (such as an apple, a cup, a book and so on), and can be also a person; and then a part of a single individual is the cup lid of the cup, the cover of the book, a certain organ or a part of the person and the like.

For example, if the user needs to identify an apple, then it only needs the gesture showing the user holds the apple or a finger pointing to the apple to appear in the visible range of the camera, so that the image acquisition module 110 acquires the image information containing the gesture of the user and the apple.

The gesture identification module 120 is configured to identify the gesture of the user and output the gesture identification result, wherein the gesture identification result is the gesture showing the object is held by the hand or the gesture showing the hand pointing to the object. Particularly, when the user needs to identify objects placed in different positions, different gestures are made. When the user makes a corresponding gesture within the visible range of the image acquisition module 110, the gesture identification module 120 can output a gesture identification result. It should be understood that the gesture identification result may also be other gestures, such as a gesture showing the object is held by two hands or the like, which is not strictly limited herein.

In an embodiment, if the user makes a gesture as shown in Fig. 3, the gesture identification module 120 will compare the gesture with a preset gesture template and output the gesture identification result as the gesture showing an object is held by a hand. If the user makes a gesture as shown in Fig. 4, the gesture identification module 120 will compare the gesture with the preset gesture template to output the gesture identification result as a gesture showing the hand pointing to the object.

Further, the user may also set the gesture shown in Fig. 4 as a gesture showing the hand pointing to a part of the object, and set the gesture shown in Fig. 5 as a gesture showing the hand pointing to the entire object.

The preset gesture template can be customized.

The image identification module 130 is configured to determine the position of the target object, identify the target object according to the gesture identification result, and output the image identification result. Whatever the gesture identification result is the gesture showing an object is held by a hand or the gesture showing the hand pointing to the object, the image identification module 130 can determine the position of the target object according to the gesture identification result.

In an embodiment, the image identification module 130 includes a target object capturing unit, an image processing unit, an image identifying unit, and a result outputting unit. The target object capturing unit is configured to determine the position of the target object according to the gesture identification result; the image processing unit is configured to extract the image feature of the target object, and the image identification unit is configured to compare the image feature of the target object with the pre-stored template feature to obtain information of the target object; and the result outputting unit is configured to output the information of the target object as the image identification result.

For example, if the user holds an apple in hand and the gesture identification result is the gesture showing the object is held by the hand, the target object capturing unit determines that the apple in the hand of the user is the target object, so that the image processing unit extracts the image features of the apple (such as the color features, the texture features and the like). The image identification unit is then configured to compare the image features of the object with the pre-stored template features. The pre-stored template features may include template features of various fruits, template features of various study articles and so on. After comparison, the target object can be identified as the apple, so as to obtain information of the target object and output the information.

For example, if the finger of the user pointing to the mouth and the gesture identification result is the gesture showing the hand pointing to the object, the target object capturing unit determines that the mouth pointed to by the hand of the user is the target object. The image processing unit compares the image features of the target object with the pre-stored template features. After comparison, the target object can be identified as the mouth of a person, so as to obtain information of the target object and output the information.

In an embodiment, the information of the target object includes the Chinese name, the English name and the like of the target object. It can be understood that the information of the target object can also include some allusions or sentences of the target object. For example, in the above embodiment, the image identification result outputted by the result outputting unit is an apple. The image identification result may also include an allusion of the apple such as Newton's gravitation, and may also include a sentence with the apple, for example, mum gives me an apple.

The interaction module 140 is configured to interact with the user according to the image identification result. In an embodiment, the interaction module 140 includes a display unit and/or a voice play unit. The display unit is configured to display the image identification result, and the voice play unit is configured to play the image identification result. That is to say, the interaction module 140 can interact with the user in a manner of displaying the image identification result, interact with the user in a manner of playing the image identification result, and simultaneously display and play the image identification result.

For example, if the image identification result outputted by the image identification module 130 is the apple, the interaction module 140 displays an image, a Chinese character and an English word of the apple, and plays the pronunciation of the apple at the same time.

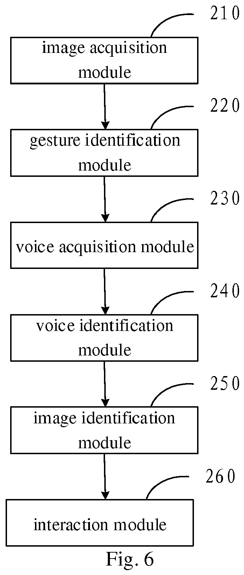

Fig. 6 is a block diagram of a device of automatically capturing a target object in another embodiment.

The internal structure of the device may correspond to the structure shown in Fig. 1, and each of the following modules may be implemented in whole or in part by software, hardware, or a combination thereof. As shown in Fig. 6, in an embodiment, the device of automatically capturing the target object includes an image acquisition module 210, a gesture identification module 220, a voice acquisition module 230, a voice identification module 240, an image identification module 250 and an interaction module 260.

The image acquisition module 210 is configured to acquire the image containing the gesture of the user and the target object. In an embodiment, the gesture of the user may be a close state of fingers as shown in Fig. 2 or a pointing state of a finger as shown in Fig. 3. The target object is a single individual or a part of a single individual. The single individual here can be any object (such as an apple, a cup, a book and so on), and can be also a person; and then a part of a single individual is the cup lid of the cup, the cover of the book, a certain organ of the person and the like.

The gesture identification module 220 is configured to identify the gesture of the user and output the gesture identification result. The gesture identification result is a gesture showing the object is held by the hand or a gesture showing the hand pointing to the object. Particularly, when the user needs to identify objects placed in different positions, different gestures are made. When the user makes a corresponding gesture within the visible range of the image acquisition module 210, the gesture identification module 220 outputs a gesture identification result.

The voice acquisition module 230 is configured to acquire voice of the user. Particularly, in an embodiment, when the user starts the image acquisition module 210, the voice acquisition module 230 is automatically started. The user may also start the voice acquisition module 230 by a gesture after the image acquisition module 210 is started.

The voice identification module 240 is configured to identify voice of the user and output the voice identification result. Particularly, the voice identification result outputted by the user includes an interactive sentence pattern. For example, if the user holds the apple in hand and asks the smart product "What is this?", then the voice identification result outputted by the voice identification module 240 will include the interactive sentence pattern including "This is XX", for example, "this is an apple". If the user points to the nose of the father and asks "What is this for the father?", then the voice identification result outputted by the voice identification module 240 will include the interactive sentence pattern including "This is XX of the father", for example, "this is the nose of the father".

The image identification module 250 is configured to determine the position of the target object, identify the target object according to the gesture identification result, and output the image identification result.

The interaction module 260 is configured to interact with the user according to the image identification result and the voice identification result.

For example, if the image identification result outputted by the image identification module 250 is a cup and the voice identification result outputted by the voice identification module 240 includes a sentence pattern of "this is XX," "This is a cup" will be displayed and/or played when the interaction module 260 interacts with the user, which significantly facilitating learning of children.

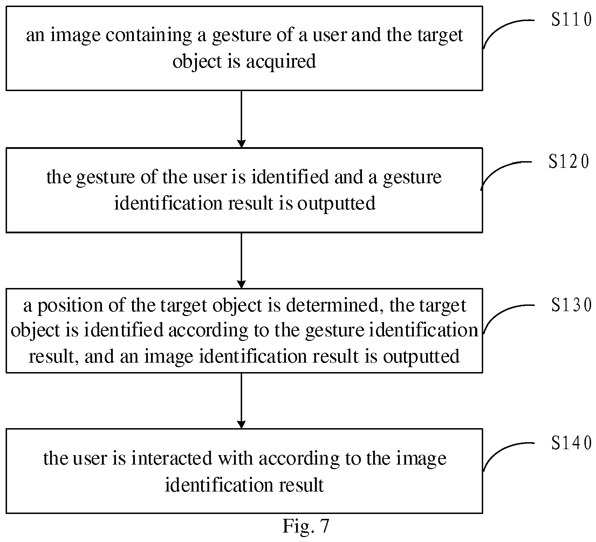

Fig. 7 is a flow chart of a method of automatically capturing a target object in an embodiment.

The method of automatically capturing a target object includes:
In step S110, an image containing a gesture of a user and the target object is acquired.

In an embodiment, the target object is a single individual or a part of a single individual. The single individual here can be any object (such as an apple, a cup, a book and so on), and can be also a person; and then a part of a single individual is the cup lid of the cup, the cover of the book, a certain organ of the person and the like.

In step S120, the gesture of the user is identified and a gesture identification result is outputted, wherein the gesture identification result is a gesture showing an object is held by a hand or a gesture showing the hand pointing to the object.

In step S130, a position of the target object is determined, the target object is identified according to the gesture identification result, and an image identification result is outputted.

In step S140, the user is interacted with according to the image identification result.

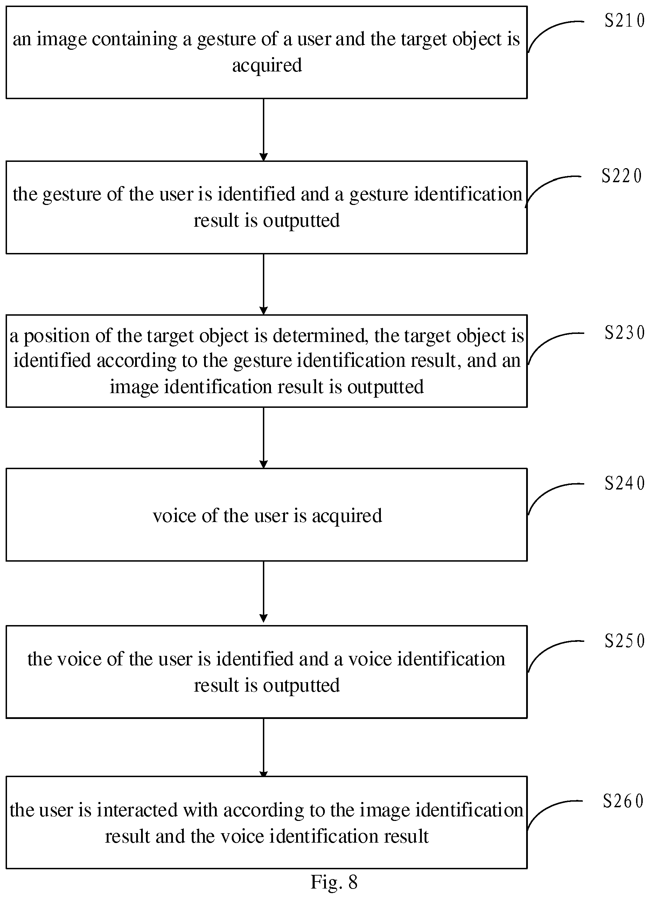

Fig. 8 is a flow chart of a method of automatically capturing a target object in another embodiment.

The method of automatically capturing a target object includes:
In step S210, an image containing a gesture of a user and the target object is acquired.

In step S220, the gesture of the user is identified and a gesture identification result is outputted, wherein the gesture identification result is a gesture showing an object is held by a hand or a gesture showing the hand pointing to the object.

In step S230, a position of the target object is determined, the target object is identified according to the gesture identification result, and an image identification result is outputted.

In step S240, voice of the user is acquired.

In step S250, the voice of the user is identified and a voice identification result is outputted.

In an embodiment, step S240 and step S250 may be performed prior to step S210, and may also be performed after step S210.

In Step S260, the user is interacted with according to the image identification result and the voice identification result.

In the above method of automatically capturing a target object, the image containing the gesture of the user and the target object is acquired; the gesture of the user is identified and the gesture identification result is outputted; the position of the target object is determined, the target object is identified according to the gesture identification result, and the image identification result is outputted; the user is interacted with according to the image identification result; so that even if it needs to identify one of a plurality of the target objects or a part of a target object, the target object can be also captured accurately according to the gesture of the user; and then the target object can be identified and the user can be interacted with, which improves identification accuracy and interactive performance.

It can be understood that, in addition to identifying the gesture of the user, the method of automatically capturing the target object in the present application can also identify other actions of the user, including but not limited to eyeball movement, body rotation, footstep movement and the like.

In an embodiment, one or more computer non-transitory storage medium storing computer readable instructions is provided. When the computer readable instructions are executed by the one or more processors, the one or more processors are caused to perform the steps of:
An image containing a gesture of a user and the target object is acquired.

The gesture of the user is identified and a gesture identification result is outputted, wherein the gesture identification result is a gesture showing an object is held by a hand or a gesture showing the hand pointing to the object;

A position of the target object is determined, the target object is identified according to the gesture identification result, and an image identification result is outputted.

The user is interacted with according to the image identification result.

Those skilled in the art may understand that all or part of the processes for implementing the methods in the above embodiments may be implemented by a computer program instructing relevant hardware. The program may be stored in a computer-readable storage medium. When the program is executed, the processes of the embodiments in the above methods may be included. The storage medium may be a non-transitory storage medium such as a magnetic disk, an optical disk, a read-only memory (ROM), or a random access memory (RAM) and the like.

Although the respective embodiments have been described one by one, it shall be appreciated that the respective embodiments will not be isolated. Those skilled in the art can apparently appreciate upon reading the disclosure of this application that the respective technical features involved in the respective embodiments can be combined arbitrarily between the respective embodiments as long as they have no collision with each other. Of course, the respective technical features mentioned in the same embodiment can also be combined arbitrarily as long as they have no collision with each other.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A method of automatically capturing a target object, comprising:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and
interacting with the user according to the image identification result.

2. The method of claim 1, wherein the step of determining the position of the target object, identifying the target object according to the gesture identification result, and outputting the image identification result comprises:
determining the position of the target object according to the gesture identification result;
extracting an image feature of the target object;
comparing the image feature of the target object with a pre-stored template feature to obtain information of the target object; and
outputting the information of the target object as the image identification result.

3. The method of claim 1, wherein the target object is a single individual or a part of the single individual.

4. The method of claim 1, further comprising:
acquiring voice of the user;
identifying the voice of the user and outputting a voice identification result;
wherein the step of interacting with the user according to the image identification result particularly is:
interacting with the user according to the image identification result and the voice identification result.

5. The method of claim 1, wherein the step of interacting with the user according to the image identification result comprises:
the step of displaying the image identification result; and/or
the step of playing the image identification result.

6. A device of automatically capturing a target object, comprising:
a processor; and a memory having instructions stored thereon, the instructions, when executed by the processor, cause the processor to perform the following steps:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and
interacting with the user according to the image identification result.

7. The device of claim 6, wherein when the instructions are executed by the processor, the step of determining the position of the target object, identifying the target object according to the gesture identification result, and outputting the image identification result performed by the processor comprises:
determining the position of the target object according to the gesture identification result;
extracting an image feature of the target object;
comparing the image feature of the target object with a pre-stored template feature to obtain information of the target object; and
outputting the information of the target object as the image identification result.

8. The device of claim 6, wherein the target object is a single individual or a part of the single individual.

9. The device of claim 6, wherein when the instructions are executed by the processor, the processor is further caused to perform the following steps:
acquiring voice of the user;
identifying the voice of the user and outputting a voice identification result;
wherein the step of interacting with the user according to the image identification result is particularly as follows:
interacting with the user according to the image identification result and the voice identification result.

10. The device of claim 6, wherein when the instructions are executed by the processor, the step of interacting with the user according to the image identification result comprises:
the step of displaying the image identification result; and/or
the step of playing the image identification result.

11. One or more computer non-transitory storage medium storing computer readable instructions that, when executed by the one or more processors, cause the one or more processors to perform the steps of:
acquiring an image containing a gesture of a user and the target object;
identifying the gesture of the user and outputting a gesture identification result, wherein the gesture identification result is a gesture showing an object is held by a hand or a gesture showing the hand pointing to the object;
determining a position of the target object, identifying the target object according to the gesture identification result, and outputting an image identification result; and interacting with the user according to the image identification result.
